# EUROPÄISCHE PATENTSCHRIFT

(11) **EP 3 074 265 B1**
(45) Veröffentlichungstag und Bekanntmachung des Hinweises auf die Patenterteilung: **14.07.2021**
(21) Anmeldenummer: 14805519.7
(22) Anmeldetag: 21.11.2014
(51) Int. Cl.: G06F 16/29, B60K 35/00, B60K 37/06

(54) **SYSTEMWEITE SUCHE IN FAHRERINFORMATIONSSYSTEMEN**
SYSTEM-WIDE SEARCH IN DRIVER INFORMATION SYSTEMS
RECHERCHE DANS L'ENSEMBLE DU SYSTÈME DANS DES SYSTÈMES D'INFORMATION AU CONDUCTEUR

(30) Priorität: 25.11.2013 DE 102013223972
(43) Veröffentlichungstag der Anmeldung: 05.10.2016
(73) Patentinhaber: Bayerische Motoren Werke Aktiengesellschaft, 80809 München (DE)
(72) Erfinder: GRAF, Stefan, 81243 München (DE); MEULAPING FEYOU, Dimitri, 80809 München (DE); REISCHL, Verena, 85241 Hebertshausen (DE); VALDIVIA, Bianca, 89312 Günzburg (DE)
(86) Internationale Anmeldenummer: PCT/EP2014/075222
(87) Internationale Veröffentlichungsnummer: WO 2015/075162

(56) Entgegenhaltungen:
- EP-A1- 0 790 593
- EP-A2- 2 063 226
- WO-A1-03/054480
- DE-A1-102009 059 141
- DE-A1-102010 045 974
- DE-A1-102011 110 978

## Beschreibung

Die Erfindung betrifft im Allgemeinen Fahrerinformationssysteme zur Verwendung in einem Fahrzeug. Im Besonderen betrifft die Erfindung die Bereitstellung einer systemweiten oder globalen Suchfunktion in solchen Fahrerinformationssystemen.

### Hintergrund der Erfindung

Bedienoberflächen bei PC- oder CE-Geräten bieten einem Nutzer zur Interaktion eine Suche über die Inhalte des jeweiligen Systems an. Hier übliche Interaktionsformen zwischen Mensch und Computer sind jedoch ungeeignet, um ein Fahrerinformationssystem (FIS) in einem Fahrzeug während der Fahrt bedienen zu können. Bei den bisherigen Systemen kann der Nutzer seine Aufmerksamkeit bei der Bedienung vollständig dem System widmen. Demgegenüber soll die Aufmerksamkeit eines Fahrers eines Fahrzeugs möglichst vollständig auf die Führung des Fahrzeugs gerichtet sein und nicht durch fahrzeugeigene Bediengeräte abgelenkt werden. Selbst bei einer geringen Geschwindigkeit von 30km/h legt ein Fahrzeug in einer Sekunde bereits etwa 8m zurück. Daher sind Fahrzeughersteller bzw. entsprechende Zulieferunternehmen ständig bestrebt, die Mensch-Computer-Schnittstelle hinsichtlich der Bedienbarkeit in Fahrzeugen so zu verbessern, dass der Fahrer möglichst wenig von seiner Fahraufgabe abgelenkt wird und sich möglichst dauerhaft auf die Fahraufgabe konzentrieren kann, um Sach- und Personenschäden aufgrund von Unaufmerksamkeiten zu vermeiden.

DE 699 16 482 T2 zeigt beispielsweise ein Informationssystem für Kraftfahrzeuge, bei dem jedoch im Wesentlichen nur die Interaktionen zwischen Nutzer und System zur Steuerung einer Navigationsfunktion betrachtet wird. DE 10 2011 110978 A1 offenbart ein Verfahren zum Erfassen einer Eingabe unabhängig von einer Eingabeaufforderung.

Fahrerinformationssysteme (FIS) moderner Kraftfahrzeuge sind nicht mehr lediglich auf die Funktionen Navigation und Radioempfang beschränkt. Mittlerweile sind FIS über Kommunikationsverbindungen mit dem Internet verbunden und haben Zugriff über im FIS laufende Softwareapplikationen auf zahlreiche externe Dienste, wie soziale Netzwerke, Multimediaanbieter, Verbindung zum Fahrzeughersteller für online-Diagnosefunktionen etc. Auch können aktuelle FIS selbst mit weiteren Datenbanken, wie beispielsweise einer Mediendatenbank im Speicher eines mp3-Players, einer Termindatenbank in einem Terminkalender oder einem Adressbuch in einem Smartphone oder bei einem Dienstanbieter im Internet verbunden werden. Die Vielfalt der für den Führer eines Fahrzeugs jederzeit über das FIS verfügbaren Dienste verstärkt, dass die von Arbeitsplatzcomputern bekannte Interaktion des Nutzers mit einem Computer immer weniger für den Einsatz in einem Fahrzeug zur Interaktion mit einem FIS geeignet sind, da die herkömmlichen Interaktionsformen zu lange die Aufmerksamkeit des Nutzer in Anspruch nehmen. Die damit verbundene Ablenkung des Fahrers von seiner Fahraufgabe erhöht direkt das Risiko von Unfällen und damit von Sach- und Personenschäden.

### Offenbarung der Erfindung

Es ist die Aufgabe der vorliegenden Erfindung, ein verbessertes Fahrerinformationssystem (FIS) für ein Fahrzeugs vorzuschlagen, das sich einfacher, insbesondere während der Fahrt des Fahrzeugs, durch den Fahrzeugführer als Nutzer bedienen lässt. Dabei ist es wünschenswert, dass die notwendigen Interaktionen mit dem FIS die Aufmerksamkeit des Nutzers von seiner Hauptaufgabe, nämlich der Führung des Fahrzeugs, so wenig wie möglich abzieht.

Diese Aufgabe wird mit den jeweiligen Merkmalen der unabhängigen Ansprüche gelöst. Weitere Merkmale und Details der Erfindung ergeben sich aus den Unteransprüchen, der Beschreibung und den Zeichnungen.

Unter einem Fahrerinformationssystem (FIS) wird hier prinzipiell ein Bordcomputer(system) für ein Fahrzeug verstanden, welches in seiner Architektur im Wesentlichen einem bekannten Computersystem entspricht, auf dem für den Einsatz in einem Fahrzeug spezifische Funktionen als Softwareapplikationen implementiert sind. Vereinfacht ist ein FIS für ein Fahrzeug ein Anzeigegerät, mit dem verschiedene das Fahrzeug bzw. die Führung des Fahrzeugs betreffende Informationen oder Verkehrsinformationen abgefragt und fahrzeugspezifische Funktionen wie Navigationsführung dem Fahrer angezeigt werden können. Informationen können dem Fahrer über eine in ein Kombiinstrument integrierte Anzeige oder über einen separaten Bildschirm in der Mittelkonsole oder auf dem Armaturenbrett dargestellt werden. Zur Interaktion des Nutzers mit dem FIS sind akustische Eingabe mittels Sprache, mechanische Eingabe über eine Tastatur oder einen Touchscreen, auch eine Steuerung mittels eines speziellen hierfür ausgelegten Bedienelements, mittels seitens des Nutzers mit einer Hand oder den Augen ausgeführter und vom FIS mittels einer Kamera erfasster Gesten oder Kombinationen aus allen genannten Mitteln möglich.

Der Begriff Komponente wird hier entsprechend dem Konzept der komponentenbasierten Entwicklung von Software verstanden. Somit sei hier unter der Suchkomponente ein Software-Element verstanden, das konform zu einem Komponentenmodell ist und gemäß einem Composition-Standard ohne Änderungen mit anderen Komponenten verknüpft und ausgeführt werden kann (vgl. z.B. William T. Councill, George T. Heineman, "Component-Based Software Engineering", Addison-Wesley, 2001, ISBN 0-201-70485-4). Die Suchkomponente ist somit ein Software-Element einer komponentenbasierten Anwendung und besitzt definierte Schnittstellen zur Verbindung mit anderen Komponenten.

Ein Kerngedanke der Erfindung besteht darin, eine zentrale Suchkomponente zur Bereitstellung einer zentralen Suchfunktion in die Architektur des FIS derart zu integrieren, dass jeweils (Such)Instanzen der Suchkomponente jederzeit, bevorzugt kategoriespezifisch, durch den Nutzer aufgerufen werden können. D.h., der Nutzer kann jederzeit im FIS eine Suchanfrage auslösen, wobei die aktuell im Vordergrund laufende Funktionskategorie des FIS einen Kontext für die Suchanfrage darstellen kann. Beispielsweise, wenn die im Vordergrund laufende Funktionskategorie "Musik" ist, ist die Suchkomponente so ausgelegt, dass ein Aufruf einer Suchinstanz aus der Kategorie Musik heraus dazu führt, dass zunächst Suchergebnisse dieser Kategorie gemäß einem vom Nutzer eingegebenen Suchwort ausgegeben werden. D.h., die Suchanfrage liefert Suchergebnisse für den aktuellen Kontext zuerst, erfolgt aber bevorzugt als globale Suche in jedem Fall in allen unterstützten Kategorien. Dabei werden für jede Kategorie die Suchergebnisse zurückgeliefert und angezeigt. Die Anordnung der Suchergebnisse bzw. deren Anzeigereihenfolge ist bevorzugt flexibel seitens des Nutzers einstellbar. D.h. zuerst Suchergebnisse der Kategorie Navigation, dann Suchergebnisse der Kategorie Multimedia, etc. oder auch anders.

Ein erfindungsgemäßes Fahrerinformationssystem (FIS) für ein Kraftfahrzeug weist wenigstens eine zentrale Steuereinheit, eine Anzeige, wenigstens ein Eingabemittel und mehrere jeweils eine Kategorie definierende Applikationen auf, die jeweils mit einer Datenbank mit kategoriespezifischen Daten verbunden sind. Kategorien können beispielsweise Unterhaltung, Kontakte, Navigation, online-Dienste etc. sein.

Die unabhängigen Ansprüche definieren die Erfindung.

Eine zentrale Suchkomponente des FIS kann konfiguriert sein, dem Nutzer, nach einem Aufruf der Suchkomponente, vorherbestimmbare Suchworte zur Auswahl anzuzeigen. Dabei kann es sich beispielsweise um bei einer letzten Suche eingegebene Suchworte handeln. Beispielsweise könnte es in der Kategorie Navigation einige Ziele geben, die von einem Nutzer regelmäßig angefahren werden, wie beispielsweise der eigene Wohnort, der Arbeitsplatz, bestimmte für Freizeitaktivitäten regelmäßig aufgesuchte Orte etc. Solche Orte können dem Nutzer vorteilhaft bei einem Aufruf der Suchkomponente aus dem Kontext Navigation, beispielsweise entsprechend ihrer Auswahlhäufigkeit oder auch entsprechend bestimmter Zeitmuster zur direkten Auswahl angeboten werden. Jedes Mal, wenn der Nutzer eine derartige angebotene Auswahl nutzen kann, wird die Interaktionszeit mit dem FIS entsprechend verkürzt und damit der Nutzer als Fahrer nicht unnötig von der Fahraufgabe abgelenkt. D.h., mit der Erfindung wird erreicht, dass der Fahrer seine Aufmerksamkeit mit weniger Unterbrechungen auf die Fahraufgabe richten kann. Dies hilft Unfälle und damit Sach- und Personenschäden zu vermeiden.

Die zentrale Suchkomponente kann konfiguriert sein, die Suchergebnisse nach Unterkategorien sortiert anzuzeigen. Bevorzugt werden dem Nutzer die Suchergebnisse sortiert mit ordnenden Überschriften angezeigt. Dabei werden dem Nutzer bevorzugt wenigstens zwei spezifische Ergebnisse zur Direktauswahl auf der Anzeige pro Überschrift angezeigt.

Die zentrale Suchkomponente ist konfiguriert, nach einer erfolgten Auswahl eines Suchergebnisses durch den Nutzer, für das ausgewählte Suchergebnis mögliche kategoriespezifische nächste Interaktionsschritte mit dem FIS anzubieten. Die zentrale Suchkomponente ist insbesondere konfiguriert, nach einer Auswahl eines Suchergebnisses durch den Nutzer, das aus der Kategorie Navigation und nicht aus der zu dem aktuellen Kontext zugehörigen Kategorie stammt, für das ausgewählte Suchergebnis für die Kategorie Navigation mögliche kategoriespezifische nächste Interaktionsschritte anzubieten. Beispielsweise, wenn das Suchergebnis aus der Kategorie Navigation stammt, kann die zentrale Suchkomponente konfiguriert sein, dem Nutzer als nächste Interaktionsschritte eine erneute oder weitere Suchanfrage für eine Straßensuche, eine spezifische Funktion der Kategorie Navigation, wie beispielsweise "Navigation starten" oder die Darstellung des Suchergebnisses in einer Straßenkarte auf der Anzeige zur Auswahl anzubieten. Dadurch ergibt sich für den Nutzer der Vorteil, dass er alle im System möglichen Bedienhandlungen mit dem gefundenen Suchbegriff auf einen Blick erkennen kann und damit nicht den längeren Weg zur Auswahl einer Funktion über das hierarchische Menüsystem des FIS gehen muss. Dies führt zu einer deutlichen Minimierung der Interaktionszeit und damit der Ablenkung des Nutzers von der Führung des Fahrzeugs.

Die zentrale Suchkomponente kann konfiguriert sein, dem Nutzer des FIS zusammen mit den Suchergebnissen als eine weitere Auswahlmöglichkeit, einen Wechsel in eine der anderen Kategorien des FIS zur Auswahl anzubieten. Dabei kann die zentrale Suchkomponente bevorzugt weiter so konfiguriert sein, dass in einer ausgewählten Kategorie die nächste Suche unmittelbar mit dem zuletzt eingegebenen Suchbegriff gestartet wird. Dieses Vorgehen erreicht wiederum eine Verkürzung der Interaktionszeit, in den Fällen, in denen der Nutzer bei einer ersten kategoriespezifischen Suche erkennt, dass er eigentlich in einer anderen Kategorie suchen wollte. Dazu muss der Nutzer nur über den zur Auswahl angebotenen Kategorienwechsel die Kategorie wechseln. Danach führt eine zur Zielkategorie gehörige Suchinstanz der zentralen Suchkomponente sofort eine Suche mit dem letzten Suchwort durch.

Die zu durchsuchenden Daten der jeweiligen Kategorien können Daten einer Datei, Daten eines Kalendereintrags, Daten einer Notiz, Daten einer Webseite oder Daten in einer Datenbank oder ähnliches sein. Die zu durchsuchenden Daten der jeweiligen Kategorien können lokal, beispielsweise in einer Speicherart oder verschiedenen Speicherarten, wie beispielsweise einem flüchtigen Speicher, einem Festplattenspeicher oder einem lokalen Netzwerk, innerhalb des Fahrzeugs oder außerhalb des Fahrzeugs, wie beispielsweise im Internet oder in einem Backend, abgelegt sein. Die zu durchsuchenden Daten der jeweiligen Kategorien können entweder alle in einer zentralen Datei oder Datenbank, in getrennten Dateien oder Datenbanken pro Kategorie oder eine Kombination davon abgelegt sein. Die zu durchsuchenden Daten bestimmter Kategorien können auch in einer gemeinsamen Datenbank zusammengefasst abgelegt sein und die Daten der anderen Kategorien können wiederum in einzelnen Dateien oder Datenbanken abgelegt sein.

Die zentrale Suchkomponente kann für das Durchsuchen und Auffinden von jeglichen im FIS verfügbaren Daten, wie beispielsweise Dateinamen, Dateiattribute, Metainformationen, Datei-/Datenbankinhalte, Webseiten, Webinhalte, Menüeinträge, Bedienungsanleitungseinträge, Kalendereinträge, eingerichtet sein.

Jede Kategorie des FIS kann eine eigene zugeordnete Suchkomponente oder Instanz der zentralen Suchkomponente aufweisen. D.h., die jeweilige Suchkomponente oder Suchinstanz übernimmt das Durchsuchen der Datenbank der entsprechenden Kategorie, sobald diese eine Sucheingabe von der zentralen Suchkomponente erhält. Dadurch kann die globale Suche einfach erweitert werden, indem Kategorien mit eigener Suchinstanz einfach entdeckt, eingebunden oder entfernt werden können, auch wenn die Art ihrer Daten vorher nicht bekannt ist. Die Suche bietet dabei eine Schnittstelle mit deren Hilfe Erweiterungen, beispielsweise neue Suchinstanzen als Plug-ins, flexibel hinzugefügt oder entfernt werden können.

Die zentrale Suchkomponente ist bevorzugt konfiguriert, eigenen Dateien und/oder Datenbanken zu durchsuchen, Suchanfragen an jeweilige Suchinstanzen der Kategorien weiterzuleiten und die von allen Suchinstanzen gelieferten Suchergebnisse zu sammeln.

Die zentrale Suchkomponente kann auch konfiguriert sein, Daten und/oder Dateien von bestimmten Kategorien zu indizieren und diese zusammen mit Indexdaten in eine eigene Datenbank mit direktem Zugriff zu speichern, dort kann die zentrale Suchinstanz selber jederzeit und schnell Suchen durchführen. Die zentrale Suchkomponente kann dann weiter konfiguriert sein, Suchanfragen nur an die Suchinstanzen weiterzuleitet, deren Daten nicht indiziert worden sind, und schließlich eigene Suchergebnisse mit denen der weiteren Suchinstanzen zusammenzuführen.

Die zentrale Suchkomponente kann weiter konfiguriert sein, die Daten und/oder Dateien aller Kategorien in einer globalen Datenbank zu indizieren, sodass die zentrale Suchkomponente jede Suche vollständig selbst durchzuführen kann. Alternativ oder zusätzlich kann die zentrale Suchkomponente auch einen direkten Zugriff auf die jeweiligen Daten und/oder Dateien und/oder Datenbanken der einzelnen Kategorien haben und konfiguriert sein, die Suchen selbst durchzuführen.

Es sei darauf hingewiesen, dass die zentrale Suchkomponente separat zur Mensch-Maschinen-Schnittstelle oder in diese integriert ausgeführt sein kann.

Ein erfindungsgemäß ausgestaltetes FIS eignet sich besonders für Kraftfahrzeuge wie Automobile, aber die hier vorgestellten Prinzipien sind auch auf Motorräder übertragbar bzw. dort einsetzbar.

### Bevorzugte Ausführungsbeispiele

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren.
Figur 1 zeigt ein stark vereinfachtes Blockschaltbild eines FIS;
Figur 2 veranschaulicht ein Beispiel für eine schnell verfügbare Suchfunktion durch Integration der Suchfunktion als zentrale Suchkomponente in ein jederzeit aufrufbares Schnellzugriffmenü eines Fahrerinformationssystems (FIS);
Figur 3 veranschaulicht eine beispielhafte Darstellung einer Suchworteingabe mittels einer Buchstabierfunktion (Speller);
Figur 4 veranschaulicht eine beispielhafte Darstellung einer Suchworteingabe mittels Tastatur;
Figur 5 veranschaulicht eine beispielhafte Darstellung einer Suchworteingabe mittels Handschrift über eine berührungsempfindliche Sensoroberfläche;
Figur 6 veranschaulicht ein Beispiel einer zentralen Informationsanzeige (CID) nach Eingabe eines Suchwortes "MÜNCH" zusammen mit einem Beispiel einer Suchergebnisdarstellung;
Figur 7 veranschaulicht ein Beispiel für eine Darstellung möglicher nächster Interaktionsschritte mit dem Fahrerinformationssystem in Fortsetzung des Beispiels der Figur 6;
Figur 8 veranschaulicht ein erstes Beispiel für eine mögliche Architektur des Gesamtsystems;
Figur 9 veranschaulicht ein zweites Beispiel für eine mögliche Architektur des Gesamtsystems;
Figur 10 veranschaulicht ein drittes Beispiel für eine mögliche Architektur des Gesamtsystems;
Figur 11 veranschaulicht ein viertes Beispiel für eine mögliche Architektur des Gesamtsystems; und
Figur 12 veranschaulicht die Implementierung der zentralen Suchkomponente separat zur MMI.

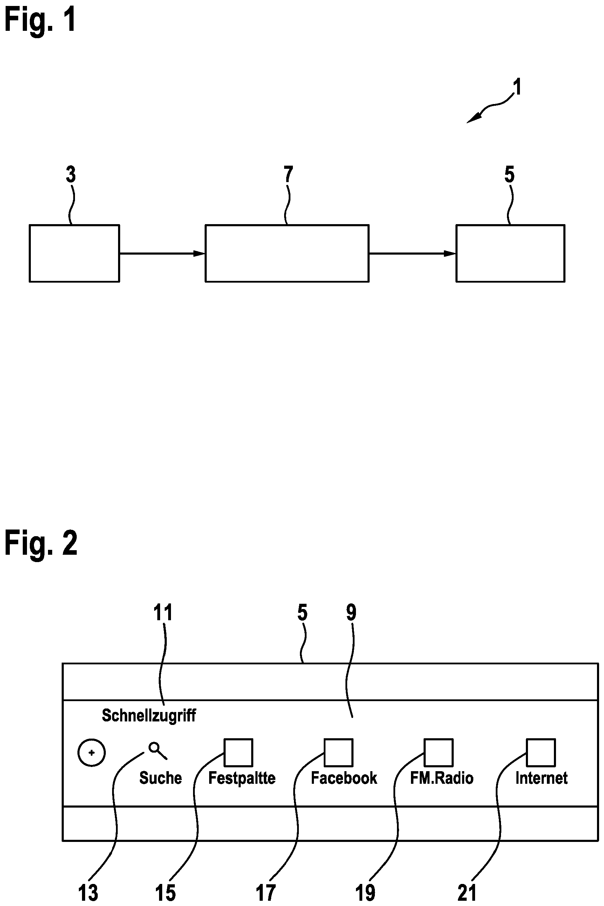

Figur 1 ist ein stark vereinfachtes Blockschaltbild eines FIS 1. Das FIS 1 weist im Wesentlichen eine Eingabeeinheit 3, wie beispielsweise ein zentrales Bedienelement (ZBE), zur Eingabe von Befehlen und Daten in das FIS 1 durch einen Nutzer und eine zentrale Informationsanzeige (CID) 5 zur Ausgabe von Informationen an den Nutzer auf. Des Weiteren besitzt das FIS 1 ähnlich zu einem bekannten Computersystem eine Haupteinheit 7, die im Wesentlichen wie ein bekannter Computer aufgebaut ist. D.h., die Haupteinheit 7 besitzt wenigstens eine Rechen- oder Verarbeitungseinheit, Speichermittel zum Speichern der Software des FIS 1 und der auf dem FIS 1 ausgeführten Applikationen (oder Anwendungen), Speichermittel zum Speichern von Arbeitsdaten und Schnittstellen zur Verbindung und Kopplung anderer Bestandteile des FIS 1, wie dem ZBE 3 und dem CID 5.

Figur 2 veranschaulicht ein Beispiel für eine schnell verfügbare Suchfunktion durch Integration der Suchfunktion in ein jederzeit aufrufbares Schnellzugriffmenü des Fahrerinformationssystems (FIS) 1 der Figur 1.

Beispielsweise kann das FIS 1 so konfiguriert sein, dass durch Betätigung einer zugeordneten Taste des FIS oder mittels einer zugeordneten Bediengeste an dem zentralen Bedienelement (ZBE) 3 ein Schnellzugriffsmenü oder Fenster über den aktuellen Inhalt des zentralen Informationsbildschirms, CID 5, des FIS 1 als Überlagerung (Overlay) 9 eingeblendet ist. In das Schnellzugriffsmenü 11 ist die Suchkomponente 13 neben anderen Funktionen oder Applikationen durch den Nutzer in bei grafischen Benutzeroberflächen bekannter Weise aus- oder anwählbar. Figur 2 zeigt als Beispiel für das Schnellzugriffsmenü 11 neben der Suchkomponente 13 auch die Möglichkeiten eines Zugriffs auf die interne Festplatte 15 des FIS 1, auf ein soziales Netzwerk 17, wie Facebook, auf die Radiofunktion 19 des FIS 1 oder das Internet 21.

Selbstverständlich ist es auch möglich, die Suche direkt zu starten, ohne das zunächst ein Schnellzugriffsmenü geöffnet werden muss. D.h. sobald die Suche gestartet wird, z.B. durch Drücken einer Taste, wird dann direkt das Suchfenster geöffnet.

Gemäß einem Aspekt der hier vorgeschlagenen Lösung kann der Nutzer jederzeit, beispielsweise über Druck auf das ZBE 3, die Suchkomponente aufrufen. Die damit ausgelöste Suchfunktion erfolgt in der durch die aktuelle Funktion des FIS 1 spezifizierte Kategorie und stellt somit eine kontextspezifische Suchanfrage dar. Die Hauptkomponente 7 des FIS 1 ist so eingerichtet, dass über den aktuellen Inhalt der zentralen Informationsanzeige CID 5 das Schnellzugriffmenü 11, in dem u.a. die Suchkomponente 13 enthalten ist, als Überlagerung (Overlay) 9 über den bisherigen Inhalt der zentralen Informationsanzeige (CID) angezeigt wird. Somit steht dem Nutzer ein zentraler Suchzugang über alle Inhalte des FIS 1 zur Verfügung.

Um den besonderen Anforderungen im Fahrzeug zu genügen, kann die Eingabe des Suchwortes mittels multimodaler Interaktion durch den Nutzer, d.h. den Fahrer oder auch einen Beifahrer erfolgen. Multimodale Interaktion bezeichnet in der Informatik Interaktionsformen zwischen Menschen und Computern, bei denen mehrere Modalitäten verwendet werden. Bei der Interaktion können verschiedenste Arten der Eingabe des Suchwortes, wie beispielsweise akustisch über ein Mikrophon (nicht gezeigt) oder elektro-mechanisch, wie beispielsweise mittels Berührung über eine berührungsempfindliche Oberfläche der zentralen Informationsanzeige CID 5, d.h. einen Touchscreen, oder über das zentrale Bedienelement ZBE 3, verwendet werden. Auch zukünftige Eingabeformen für alphanumerische Eingaben in FIS können zur Interaktion genutzt werden. Die Eingabe eines Suchfelds kann dabei durch eine entsprechende Anzeige auf der CID 5 unterstützt werden.

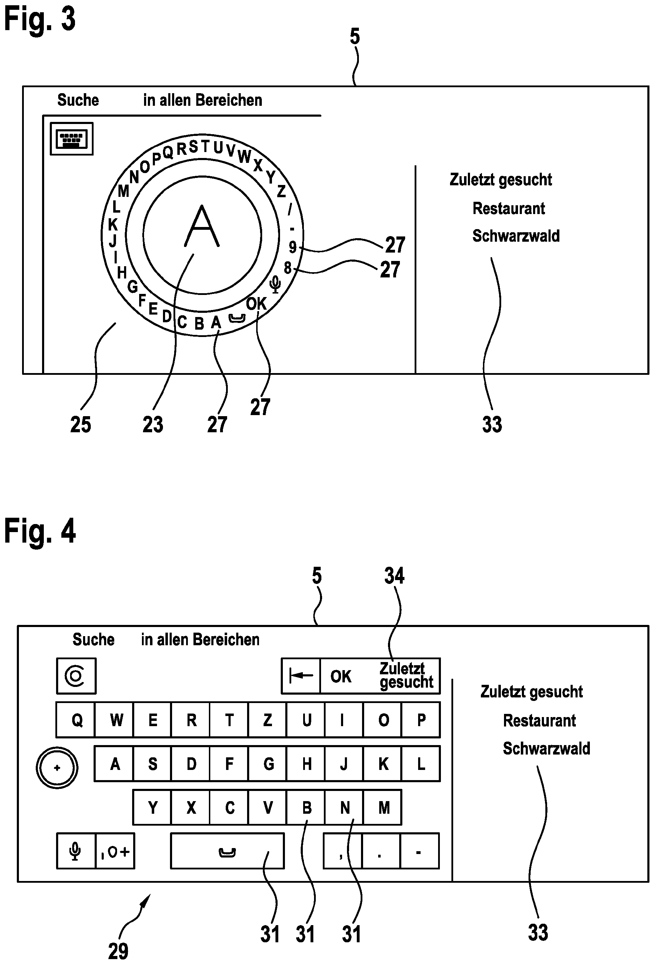

Figur 3 veranschaulicht einen Eingabevorgang in ein Suchworteingabefeld über einen "Speller" 23. Dabei wird auf dem CID 5 eine über das ZBE 3 steuerbare Auswahleinrichtung 25 für einzelne alphanummerische Zeichen 27 angezeigt. D.h., der Nutzer kann ein gewünschtes Suchwort über eine Betätigung des ZBE 3 eingeben, beispielsweise durch eine Kombination aus Drehen und Drücken. Die CID 5 zeigt dem Nutzer den Auswahlvorgang quasi als ein optisches Feedback an.

Figur 4 veranschaulicht als weitere Eingabemöglichkeit eine auf dem CID 5 emulierte Tastatur 29. Dabei wird dem Nutzer auf dem als Touchscreen ausgeführten CID 5 die alphanummerische Tastatur 29 angezeigt. Durch entsprechendes Berühren einzelner der Tasten 31 der angezeigten Tastatur kann der Nutzer ein Suchwort Zeichen für Zeichen eingeben.

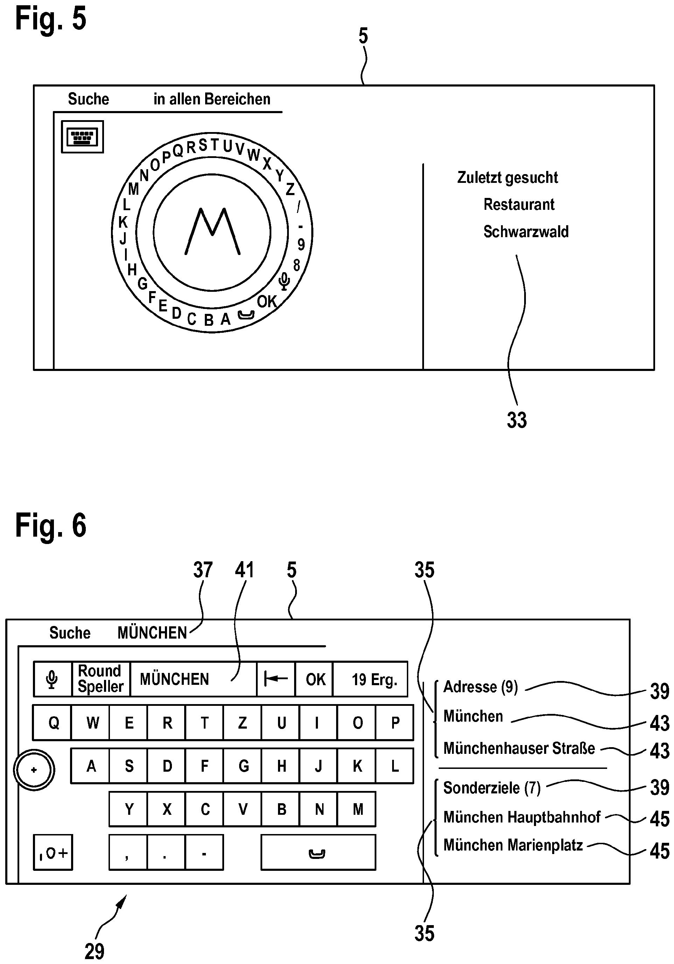

Figur 5 veranschaulicht eine weitere Eingabemöglichkeit per Handschrift. Dabei kann der Nutzer das Suchwort Zeichen für Zeichen (zeichenweise) über eine, beispielsweise auf dem ZBE 3 angeordnete, berührungsempfindliche Oberfläche in das FIS 1 eingeben. Dem Nutzer wird auf dem CID 5 als optisches Feedback der aktuelle Eingabevorgag veranschaulicht, indem die Berührung des Nutzers auf dem ZBE 3 auf dem CID 5 entsprechend nachgezeichnet wird.

Schließlich kann die Eingabe des Suchwortes auch über Sprache erfolgen. Es versteht sich, dass dazu beispielsweise ein für eine Freisprecheinrichtung vorgesehenes Mikrophon des FIS verwendet werden kann.

Besonders vorteilhaft ist es, dass das FIS 1 so eingerichtet ist, dass der Nutzer zwischen den unterschiedlichen Eingabemethoden je nach entsprechender Fahrsituation frei wählen kann. Beispielsweise kann vorgesehen sein, dass die Eingabemöglichkeit über die Softtastatur 29 auf dem CID 5 nur bei stehendem Fahrzeug zugelassen wird, da der Nutzer sonst zu viel Aufmerksamkeit auf die Bedienung der Tastatur 29 richten muss.

Um die zeit-und aufmerksamkeitsintensive alphanumerische Eingabe so kurz wie möglich zu gestalten, ist die Steuerung des FIS 1 eingerichtet, dem Nutzer bereits am Anfang einer Eingabe mögliche hochrelevante Suchworte zur Auswahl anzuzeigen. Zum Beispiel können wie in den Figuren 3 bis 5 im rechten Bereich des CID 5 gezeigt, die zuletzt eingegebenen Suchworte 33 zur Auswahl mittels Taste "zuletzt gesucht" 34 angeboten werden. In den in den Figuren 3 bis 5 gezeigten Beispielen sind die letzten beiden Suchworte "Restaurant" und "Schwarzwald".

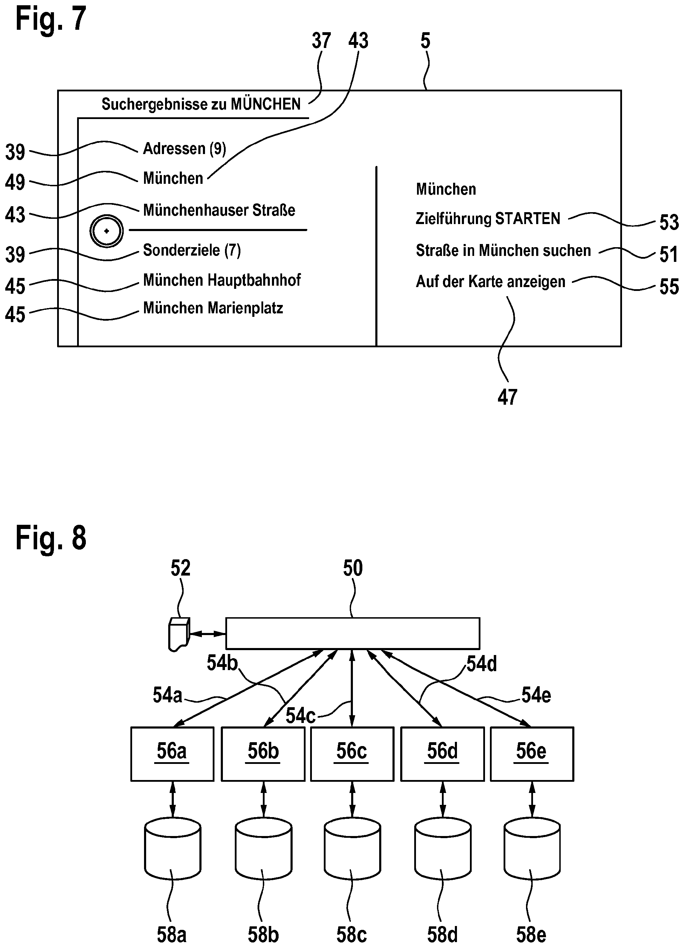

Die Figuren 6 und 7 veranschaulichen einen Eingabevorgang für ein Suchwort mittels der Softtastatur 29 und die Anzeige der dynamisch aktualisierten Suchergebnisse 35. Es versteht sich, dass zur Ausgabe der Suchergebnisse neben der grafischen Anzeige auf dem CID 5 ebenfalls eine Sprachausgabe oder, falls sinnvoll, Geräusche oder ein haptisches Feedback eingesetzt werden können. Bevorzugt erfolgt eine graphische Anzeige der Suchergebnisse auf dem CID 5 als Anzeige des FIS 1. Wie oben angemerkt, sind die Suchergebnisse aus dem Kontext der Kategorie, aus der die Suche im FIS 1 aufgerufen wurde. D.h., wenn die Suchfunktion aus der Navigationsfunktion des FIS 1 heraus aufgerufen wurde, werden dem Nutzer Suchergebnisse im Zusammenhang mit geographisch verortbaren Objekten zuerst angezeigt.

Besonders vorteilhaft werden die Suchergebnisse mit Eingabe jedes weiteren Buchstabens aktualisiert angezeigt. D.h., der Nutzer muss nicht zuerst das gesamte Suchwort eingeben, um die eigentliche Suche zu starten. In den Figuren 5 und 6 hat ein Nutzer bereits fünf Zeichen eingegeben, welche die Zeichenkette 37 "MÜNCH" bilden. Die Steuerung des FIS 1 ist so programmiert, dass die Suche mit dem ersten eingegebenen Zeichen beginnt und dynamisch mit jedem weiteren eingegebenen Zeichnen der Zeichenkette 37 die Suchergebnisse immer aktualisiert werden. Somit muss der Nutzer nur so wenig alphanumerische Zeichen wie möglich eingeben, da er das gewünschte Suchwort auch aus den aktuell angezeigten Suchergebnissen 35 auswählen und so die Eingabe weiterer Zeichen des Suchworts abkürzen kann.

Ergänzend verfügt die Steuerung des FIS 1 über eine Autovervollständigungsfunktion für die Zeichenkette 37 zum Suchwort. D.h., die vom Nutzer zeichenweise eingegebene Zeichenkette 37 wird laufend basierend auf vorbestimmten heuristischen oder statistischen Suchkriterien verwendet, um im Suchraum mögliche passende Ergebnisse zu ermitteln. Die gefundenen Ergebnisse werden dann als mögliche Vervollständigungen der aktuellen Zeichenkette 37 dem Nutzer zur Direktauswahl angezeigt. Dabei können auch fehlertolerante Suchstrategien angewendet werden, um bei einer Falscheingabe der Zeichenkette durch den Nutzer diesem bereits das eigentlich erwünschte Suchwort zur Auswahl anzeigen zu können. Dadurch wird dem Nutzer zusätzlich die Eingabe erleichtert.

Weiter werden die Suchergebnisse 35 auf dem CID 5 nach Unterkategorien 39 sortiert angezeigt.

Beispielsweise ist in der Figur 6 angenommen, dass im rechten Bildschirmbereich des CID 5 die Überschriften "Adressen (9)" und "Sonderziele (7)" als Unterkategorien 39 angezeigt werden. D.h., das FIS hat basierend auf dem bis dahin eingegebenen Suchwort "MÜNCH" dem Nutzer u.a. das automatisch vervollständigte Suchwort 41 "MÜNCHEN" angeboten, zu dem es 9 mögliche Ziele von Kontakten im Adressbuch des Nutzers bzw. 7 Sonderziele gibt. Zu jeder Unterkategorie 39 zeigt das FIS 1 weiter wenigstens zwei spezifische Ergebnisse 43, 45 zur Direktauswahl an. Dies sind "MÜNCHEN" und "MÜNCHHAUSER Straße" 43 für die Unterkategorie 39 "Adressen" und "München Hauptbahnhof" sowie "München Marienplatz" 45 für die Unterkategorie 39 "Sonderziele".

Die Anzahl der dargestellten Zeilen eines Suchergebnisses werden je nach Platzbedarf dynamisch angepasst.

In den Suchergebnissen 35 wird zur leichteren Orientierung für den Nutzer der Anteil des aktuell eingegebenen Suchstrings 37 in den gefundenen Suchergebnissen, beispielsweise durch eine Darstellung der entsprechenden Zeichen mit höherer Intensität, anderer Farbe, etc. hervorgehoben.

Figur 7 zeigt ein Beispiel für die Darstellung möglicher kontextspezifischer nächster Interaktionsschritte 47 mit dem FIS 1 in Fortsetzung des Beispiels der Figur 6, um dem Nutzer ein möglichst ablenkungsfreies Erfassen der Suchergebnisse und Interagieren mit den Suchergebnisse zu ermöglichen.

Hier werden nach der Auswahl eines Suchergebnisses, beispielsweise "MÜNCHEN" 49 im rechten Bereich der Figur 7, in einer neuen Darstellung die für dieses Ergebnis möglichen nächsten Interaktionsschritte 47 angeboten.

Diese möglichen nächsten Interaktionsschritte 47 werden bevorzugt spezifisch für die Funktionskategorie des FIS 1, aus dem die Suchfunktion aufgerufen worden ist, ausgelegt. Beispielsweise können für Suchergebnisse aus der Kategorie Navigation erneute Suchanfragen, z.B. für eine Straßensuche 51, eine spezifische Navigationsfunktion, z.B. "Zielführung starten" 53 oder "Auf der Karte darstellen" 55, angeboten werden, um nicht abschließend einige Beispiele zu nennen. Dadurch ergibt sich für den Nutzer der Vorteil, dass er alle im FIS 1 möglichen Bedienhandlungen mit dem gefundenen Suchbegriff 49 auf einen Blick erkennen kann und damit nicht den längeren Weg zur Auswahl einer Funktion, von welcher der Nutzer möglicherweise sich gar nicht bewusst ist, über das hierarchische Menüsystem des FIS 1 gehen muss. Dies führt zu einer deutlichen Minimierung der Interaktionszeit.

Schließlich werden, im Falle einer kategoriespezifischen Suche im FIS 1, um dem Nutzer eine weitere Eingabe desselben Suchbegriffes in einer anderen Kategorien zu ersparen, nach den Suchergebnissen "Sprünge" (nicht gezeigt) in die anderen Kategorien des FIS angeboten; diese "Sprünge" können auch bereits zusammen mit den Suchergebnissen angezeigt werden. Nach einem Sprung in eine der anderen Funktionskategorien des FIS wird dann zunächst mit demselben bereits eingegebenen Suchbegriff gesucht und dem Nutzer die für diese Kategorie spezifischen Suchergebnisse angezeigt.

Die zu durchsuchenden Daten der jeweiligen Kategorien können in jeglicher Form abgelegt sein. Beispielsweise können die Daten als Datei, als Kalendereintrag, Notiz, Webseite, in einer Datenbank, etc. gespeichert vorliegen.

Die zu durchsuchenden Daten der jeweiligen Kategorien können sowohl lokal auf eine oder mehreren verfügbaren Speicherarten, beispielsweise in einem flüchtigen Speicher, Festplattenspeicher, lokales Netzwerk innerhalb des Fahrzeugs, etc., im Computersystem des Fahrzeugs als auch auf einem System außerhalb des Fahrzeugs, z.B. im Internet, einem Backend, etc., abgelegt sein.

Die Daten, lokal oder außerhalb des Fahrzeugs, der zu durchsuchenden Kategorien können entweder alle in einer zentralen Datei/Datenbank, in getrennten Dateien/Datenbanken pro Kategorie oder eine Kombination davon abgelegt sein.

Die Dateien/Datenbanken können auch so organisiert sein, dass Daten von bestimmten Kategorien zusammengefasst in einer gemeinsamen Datenbank abgelegt sind und die Daten der anderen Kategorien weiterhin in einzelnen Dateien/Datenbanken liegen.

Der Zugriff auf die Daten kann mittels verschiedener Methoden erfolgen, beispielsweise Datenbankprotokolle, Ethernet, MOST, TCP/IP, etc.

Die Suche kann für das Finden von jeglichen im Gesamtsystem verfügbaren Daten ausgerichtet sein, beispielsweise Dateinamen, Dateiattribute, Metainformationen, Datei-/Datenbankinhalte, Webseiten, Webinhalte, Menüeinträge, Bedienungsanleitungseinträge, Kalendereinträge, etc.

Jede zu durchsuchende Kategorie kann über eine eigene Suchkomponente oder Suchinstanz verfügen, sodass jede Suchkomponente das Durchsuchen der Datenbank der entsprechenden Kategorie übernimmt, sobald diese eine Sucheingabe erhält. Die globale Suche lässt sich somit einfach erweitern, indem Kategorien mit eigener Suchinstanz einfach entdeckt, eingebunden oder entfernt werden können, auch wenn die Art ihrer Daten vorher nicht bekannt ist. Die Suchkomponente bietet so eine Schnittstelle mit deren Hilfe Erweiterungen (neue Suchinstanzen als Plug-ins) flexibel hinzugefügt oder entfernt werden können.

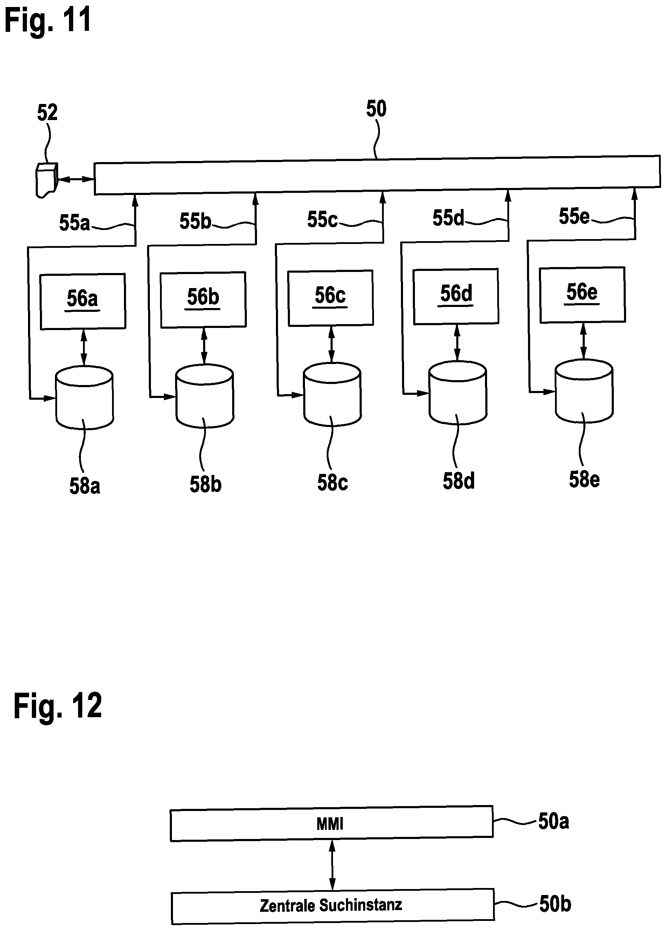

Die für die Flexibilität und Erweiterbarkeit der Suche notwendige Schnittstelle kann wie folgt aussehen: Zentrale Suchkomponente als Teil der Mensch-Maschine-Schnittstelle (MMI) oder beide separat aber gekoppelt. Die Suche in mehreren Kategorien kann auch von der MMI, von einer zentralen in Form von Hard- und/oder Software implementierten Suchkomponente oder von einer Kombination aus MMI und Suchkomponente gestartet und gesteuert werden (vgl. Figur 12). Die zentrale Suchkomponente kann selbst aus einer oder mehreren Hard-/Softwarekomponenten bestehen. Eine Suchkomponente kann gleichzeitig eine Suchinstanz für eine Kategorie und eine zentrale Schnittstelle für das Einbinden weiterer Suchinstanzen sein.

Die ausgewählte Schnittstelle (MMI, Suchkomponente, etc.) erhält immer zuerst die vom Nutzer abgegebene Suchanfrage mit den eingegebenen Zeichen und leitet diese an die jeweiligen Suchinstanzen weiter und/oder führt selbst die (Teil-)Suche durch, je nachdem ob die Schnittstelle selbst eine Suchinstanz ist.

Die zentrale Suchschnittstelle (MMI, Suchkomponente, etc.) nutzt verschiedene Kriterien, um die Reihenfolge zu bestimmen, in welcher die Suchinstanzen aufgerufen werden. Nachfolgend werden Beispiele für geeignete Kriterien gegeben: Die zentrale Suchkomponente kann die Suche in allen Kategorien nacheinander starten und entsprechend die Ergebnisse sammeln. Die Suche kann gleichzeitig bzw. parallel in allen Kategorien gestartet werden. Die Suche kann parallel für eine Gruppe von Kategorien gestartet werden. Die Suche kann nacheinander zwischen Gruppen von Kategorien erfolgen, wobei die Suche die Kategorien derselben Gruppe parallel oder nacheinander abarbeitet. Die Reihenfolge, in der die Kategorien abgefragt werden, kann Häufigkeitskriterien unterliegen. Die Suchreihenfolge zwischen den Kategorien kann von Software/Hardware-Einschränkungen beeinflusst werden. Die Suchreihenfolge kann einer vorher festgelegten Priorität unterliegen. Selbstverständlich können die genannten Kombinationen beliebig kombiniert und durch weitere Kriterien ergänzt werden.

Jede Suchinstanz implementiert einen eigenen Suchalgorithmus basierend auf den/dem für die eigenen Daten gültigen/m Kriterien/Kriterium. Die (zentrale) Suchinstanz kann z.B. die Zugriffshäufigkeit, den Ablageort, etc. nutzen, um die Suche durchzuführen und die Ergebnisse zu sortieren.

Anhand der Figuren 8 bis 12 werden mögliche Architekturen des FIS 1 mit integrierter zentralen Suchkomponente sowie kategorienbezogenen Suchinstanzen sowie der zugehörigen Datenbanken sowie Dateien kurz erläutert.

Der Begriff Komponente wird hier entsprechend dem Konzept der komponentenbasierten Entwicklung von Software verstanden. Demnach ist die Suchkomponente ein Software-Element, das konform zu einem Komponentenmodell ist und gemäß einem Composition-Standard ohne Änderungen mit anderen Komponenten verknüpft und ausgeführt werden kann (vgl. z.B. William T. Councill, George T. Heineman, "Component-Based Software Engineering", Addison-Wesley, 2001, ISBN 0-201-70485-4). Die Suchkomponente ist somit ein Software-Element einer komponentenbasierten Anwendung und besitzt definierte Schnittstellen zur Verbindung mit anderen Komponenten.

In Figur 8 ist die zentrale Suchkomponente als Bestandteil der Mensch-Maschine-Schnittstelle (MMI) 50 implementiert, d.h. die MMI 50 ist für die Rolle der zentralen Suchinstanz eingerichtet. Die zentrale Suchkomponente ist konfiguriert, zum einen eigene lokale Dateien 52 und/oder Datenbanken, falls vorhanden, zu durchsuchen und zum anderen Suchanfragen 54a, 54b, 54c, 54d, 54e an die jeweiligen kategorienbezogenen Suchinstanzen der mit dem FIS verbundenen Applikationen 56a, 56b, 56c, 56d, 56e weiterzuleiten/zu delegieren und die Ergebnisse der jeweiligen Suche zu sammeln. D.h., die zentrale Suchkomponente der MMI 50 sammelt die Treffer von allen Applikationen 56a, 56b, 56c, 56d, 56e und wandelt diese gegebenenfalls in ein geeignetes Format um und leitet diese anschließend an die CID 5 zur Darstellung weiter.

Bei der Architektur der Figur 8 ist besonders vorteilhaft, dass durch die Delegation der Suche an Suchinstanzen der einzelnen Applikationen 56a, 56b, 56c, 56d, 56e die Zugriffe auf die Applikationen parallel erfolgen. Durch die zentrale Suchkomponente der MMI 50 können die Suchanfragen synchronisiert werden. Außerdem wird nur eine Kommunikationsschnittstelle zwischen MMI 50 und den Applikationen 56a, 56b, 56c, 56d, 56e benötigt.

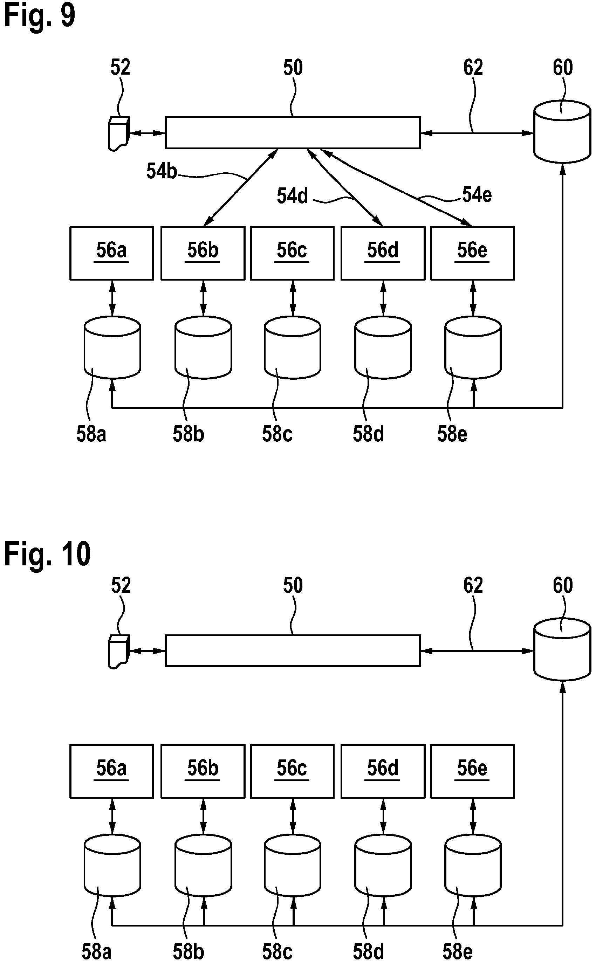

In Figur 9 ist die zentrale Suchkomponente als Bestandteil der MMI 50 konfiguriert, Daten und/oder Dateien bestimmter Kategorien 56a, 56e zu indizieren und die Indexdaten und die Daten/Dateien in eine eigene globale Datenbank 60 mit direktem Zugriff 62 abzuspeichern. D.h., bei dieser Lösung werden Daten von bestimmten Datenbanken, nämlich 58a, 58e, oder von allen Applikationen 56a, 56b, 56c, 56d, 56e in die globale Datenbank 60 kopiert. Weiter ist die Suchkomponente in der MMI 50 konfiguriert, Suchanfragen nur an die Suchinstanzen von solchen Applikationen 56b, 56d, 56e weiterzuleitet, deren Daten von der zentralen Suchkomponente in der MMI 50 nicht indiziert worden sind. Die zentrale Suchkomponente in der MMI 50 führt eigene Ergebnisse mit denen der einzelnen Suchinstanzen zusammen und leitet die Ergebnisse zur Darstellung an die CID 5 weiter.

Die zentrale Suchinstanz, die im Beispiel der Figur 9, wieder Bestandteil der MMI 50 ist, führt die Suche in der globalen Datenbank 60 selbst durch und leitet gegebenenfalls Suchanfragen an Applikationen 56b, 56d, 56e weiter, deren Daten nicht in der globalen Datenbank 60 enthalten sind.

Die Architektur der Figur 9 erreicht eine gute gesamte Performanz, da Daten aus Datenbanken mit langsamem Zugriff in die globale Datenbank mit schnellem Zugriff aufgenommen werden können.

Figur 10 ist eine Weiterbildung der in der Figur 9 gezeigten Architektur. Die Daten/Dateien aller Kategorien werden von der zentralen Suchkomponente als Bestandteil der MMI 50 indiziert und zusammen mit den Indexdaten in der globalen Datenbank 60 gespeichert, sodass die Suche immer ausschließlich von der zentralen Suchkomponente der MMI 50 selbst durchgeführt werden kann.

In der Figur 11 hat die zentrale Suchkomponente als Bestandteil der MMI 50 jeweils direkten Zugriff 55a, 55b, 55c, 55d, 55e auf die jeweiligen Daten/Dateien bzw. Datenbanken 58a, 58b, 58c, 58d, 58e der Kategorien und führt die Suche selbst durch.

Figur 12 veranschaulicht die Implementierung der zentralen Suchkomponente 50b separat zur MMI 50a. Die Suchanfragen werden von der Mensch-Maschine-Schnittstelle (MMI) 50a an die zentrale Suchkomponente 50b übergeben, die diese entsprechend einer der anhand der Figuren 8 bis 11 erläuterten Strukturen abarbeitet und/oder an die jeweiligen Applikationen 56a, 56b, 56c, 56e, 56d weiterleitet. Die zentrale Suchkomponente 50b sammelt die eigenen Treffer und die Treffer von allen Applikationen 56a, 56b, 56c, 56e, 56d und wandelt diese gegebenenfalls in ein geeignetes Format um. Schließlich leitet die zentrale Suchkomponente 50b die Ergebnisse an die MMI 50a zur Darstellung auf der CID 5 weiter.

Die Möglichkeiten der Architekturgestaltung beschränken sich nicht nur auf die vorstehenden Beispiele und deren Kombinationen.

Die zentrale Suchkomponente und/oder die Suchinstanzen der Applikationen sind so konfiguriert, dass innerhalb einer Kategorie die Suchergebnisse so sortiert werden, dass sich der tatsächliche Treffer möglichst in den ersten Einträgen der Ergebnisliste befindet. Für jede Kategorie kann dabei eine eigene, besonders geeignete, Sortierung gewählt werden. D.h., es werden unterschiedliche Sortierungen zwischen den Kategorien unterstützt.

Zum Beispiel kann die zentrale Suchkomponente konfiguriert sein, in der Kategorie Navigation Treffer/Suchergebnisse nach zuletzt gesuchten Zielen oder Treffern im Umkreis des Standorts zu sortieren. Entsprechend können bei einer Suche nach einem Point-of-Interest (POI) in der Kategorie Navigation POIs entsprechend ihrer Nähe zum aktuellen Standort des Fahrzeugs oder zu einem Zielort sortiert werden.

Für die Kategorie Musik kann die zentrale Suchkomponente konfiguriert sein, die Suchergebnisse/Treffer nach Abspielhäufigkeit zu sortieren. In der Kategorie Kontakte können Treffer alphabetisch sortiert werden.

Nach Abschluss der Suche sammelt die ausgewählte zentrale Suchkomponente (MMI/Suchkomponente) die Suchergebnisse von allen Instanzen (auch Ergebnisse der eigenen Instanz, falls zutreffend) und bereitet diese für die Darstellung auf dem CID vor. Dabei kann die Suchkomponente konfiguriert sein, die Ergebnisanzahl basierend auf festgelegten Kriterien zu limitieren.

Die Suchkomponente kann weiter konfiguriert sein, genauso wie für die Suche, mit unterschiedlichen Kombinationen von Kriterien die Reihenfolge zu bestimmen, in der die Ergebnisse aus den jeweiligen Kategorien gesammelt und an die MMI zur Darstellung weitergeleitet werden. Dabei kann die Sortierung der Treffer in jeder der involvierten Hard-/ und Softwarekomponenten oder in mehreren gleichzeitig erfolgen (MMI, Suchinstanz, Domäne, etc.).

Die zentrale Suchkomponente übernimmt die Sortierung aller Suchergebnisse, um z.B. diejenigen Ergebnisse, die für den Nutzer am meisten relevant sind, zuerst anzubieten. In die zentrale Suchkomponente können hierzu mehrere Kriterien und Algorithmen für die Sortierung und Darstellung der Treffer integriert sein.

Ein FIS mit der hier vorgeschlagenen zentralen Suchkomponente stellt sicher, dass der Fahrer eines Fahrzeugs möglichst wenig von der Führung des Fahrzeugs durch die Nutzung des FIS abgelenkt wird sowie einen einfachen intuitiven Zugang zu allen Informationen, die das FIS dem Nutzer zur Verfügung stellt, erhält. Die zentrale Suchkomponente bietet somit eine alternative Zugangsart zu den Inhalten eines FIS neben dem hierarchischen Menübaum.

## Patentansprüche

1. Fahrerinformationssystem, FIS, (1) für ein Kraftfahrzeug mit wenigstens einer zentralen Steuereinheit (7), einer Anzeige (5), wenigstens einem Eingabemittel (3), einer Mensch-Maschine-Schnittstelle, MMI, (50) und mehreren jeweils eine Kategorie definierenden Applikationen (56a, 56b, 56c, 56d, 56e),
wobei die Applikationen (56a, 56b, 56c, 56d, 56e) jeweils mit einer Datenbank (58a, 58b, 58c, 58e, 58d) mit kategoriespezifischen Daten verbunden sind,
die zentrale Steuereinheit (7) eine zentrale Suchkomponente (50; 50b) enthält, von der eine oder mehrere Instanzen jederzeit durch einen Nutzer des FIS (1) über die Mensch-Maschine-Schnittstelle, MMI, (50) aufrufbar ist bzw. sind, und
die zentrale Suchkomponente (50; 50b) konfiguriert ist, eine aktuell im Vordergrund laufende Applikation des FIS (1) als einen aktuellen Kontext für eine Suche zu definieren, und die eine Instanz bzw. die mehreren Instanzen der Suchkomponente (50; 50b) konfiguriert ist bzw. sind, jeweils in wenigstens einer zu einer der Applikationen zugehörigen Kategorie eine kontextspezifische Suchanfrage in den kategoriespezifischen Daten durchzuführen, indem primär in den kategoriespezifischen Daten der Applikation, aus der die Suche aufgerufen wurde, gesucht wird,
**dadurch gekennzeichnet, dass**
die zentrale Suchkomponente (50; 50b) konfiguriert ist, die Suche als globale Suche in allen unterstützten Kategorien durchzuführen und dabei die Suchergebnisse für den aktuellen Kontext zuerst zu liefern;
wobei die zentrale Suchkomponente (50; 50b) des Weiteren konfiguriert ist, nach einer Auswahl eines Suchergebnisses (43, 45) durch den Nutzer, das aus der Kategorie Navigation und nicht aus der zu dem aktuellen Kontext zugehörigen Kategorie stammt, für das ausgewählte Suchergebnis für die Kategorie Navigation mögliche kategoriespezifische nächste Interaktionsschritte (47) anzubieten.

2. Fahrerinformationssystem (1) nach Anspruch 1, wobei die zentrale Suchkomponente (50; 50b) konfiguriert ist, dem Nutzer nach einem Aufruf der Suchkomponente vorherbestimmbare Suchworte zur Auswahl anzuzeigen.

3. Fahrerinformationssystem (1) nach Anspruch 2, wobei die vorherbestimmbaren Suchworte die bei einer letzten Suche eingegebene Suchworte sind.

4. Fahrerinformationssystem (1) nach einem der Ansprüche 1 bis 3, wobei die zentrale Suchkomponente (50; 50b) konfiguriert ist, die Suchergebnisse nach Unterkategorien sortiert anzuzeigen.

5. Fahrerinformationssystem (1) nach Anspruch 4, wobei dem Nutzer immer eine Überschrift (39) und wenigstens zwei spezifische Ergebnisse (43, 45) zur Direktauswahl auf der Anzeige (5) angezeigt werden.

6. Fahrerinformationssystem (1) nach einem der Ansprüche 1 bis 5, wobei die zu durchsuchenden Daten der jeweiligen Kategorien Daten einer Datei, Daten eines Kalendereintrag, Daten einer Notiz, Daten einer Webseite oder Daten in einer Datenbank sind, und/oder
wobei die zu durchsuchenden Daten der jeweiligen Kategorien lokal innerhalb des Fahrzeugs oder außerhalb des Fahrzeugs abgelegt sind, und/oder
wobei die zu durchsuchenden Daten der jeweiligen Kategorien entweder alle in einer zentralen Datei oder Datenbank, in getrennten Dateien oder Datenbanken pro Kategorie oder eine Kombination davon abgelegt sind, und/oder
wobei die zu durchsuchenden Daten bestimmter Kategorien zusammengefasst in einer gemeinsamen Datenbank abgelegt und die Daten der anderen Kategorien in einzelnen Dateien oder Datenbanken angelegt sind.

7. Fahrerinformationssystem (1) nach einem der Ansprüche 1 bis 6, wobei die zentrale Suchkomponente (50; 50b) für das Durchsuchen und Auffinden von jeglichen im FIS (1) verfügbaren Daten eingerichtet ist.

8. Fahrerinformationssystem (1) nach einem der Ansprüche 1 bis 7, wobei jede Kategorie des FIS (1) eine zugeordnete Suchkomponente oder Instanz der zentralen Suchkomponente aufweist, sodass die jeweilige Suchkomponente oder Instanz das Durchsuchen der Datenbank (58a, 58b, 58c, 58d, 58e) der entsprechenden Kategorie übernimmt, sobald diese eine Sucheingabe von der zentralen Suchkomponente (50; 50b) erhält.

9. Fahrerinformationssystem (1) nach einem der Ansprüche 1 bis 8, wobei die zentrale Suchkomponente (50; 50b) konfiguriert ist, eigene Dateien (52) und/oder Datenbanken zu durchsuchen und Suchanfragen an jeweilige Suchinstanzen der Kategorien weiterzuleiten und alle Suchergebnisse zu sammeln; oder wobei die zentrale Suchkomponente (50; 50b) konfiguriert ist, Daten und/oder Dateien (52) von bestimmten Kategorien zu indizieren und diese zusammen mit Indexdaten in eine eigene Datenbank (60) mit direktem Zugriff (62) zu speichern, Suchanfragen nur an die Suchinstanzen weiterzuleiten, deren Daten nicht indiziert worden sind, und eigene Suchergebnisse mit denen der weiteren Suchinstanzen zusammenzuführen; oder
wobei die zentrale Suchkomponente (50; 50b) konfiguriert ist, die Daten und/oder Dateien (52) aller Kategorien in einer globalen Datenbank (60) zu indizieren und jede Suche vollständig selbst durchzuführen; oder
wobei die zentrale Suchkomponente (50; 50b) einen direkten Zugriff auf die jeweiligen Daten und/oder Dateien und/oder Datenbanken der einzelnen Kategorien hat und konfiguriert ist, die Suche selbst durchzuführen.

10. Fahrerinformationssystem nach einem der Ansprüche 1 bis 9, wobei die zentrale Suchkomponente (50b) separat zur Mensch-Maschinen-Schnittstelle (50a) oder in diese integriert ausgebildet ist.

11. Fahrerinformationssystem (1) nach einem der vorhergehenden Ansprüche, wobei die Anordnung oder die Anzeigenreihenfolge der Suchergebnisse durch den Nutzer einstellbar ist.

12. Fahrerinformationssystem (1) nach einem der vorhergehenden Ansprüche, wobei die zentrale Suchkomponente (50; 50b) konfiguriert ist, dem Nutzer des FIS (1) zusammen mit den Suchergebnissen eine Suchanfrage mit dem zuletzt eingegebenen Suchbegriff in einer anderen Kategorie des FIS (1) anzubieten.

13. Kraftfahrzeug mit einem Fahrerinformationssystem nach einem der Ansprüche 1 bis 12.

14. Kraftfahrzeug nach Anspruch 13, wobei das Kraftfahrzeug ein Automobil oder ein Motorrad ist.

## Claims

1. Driver information system, FIS, (1) for a motor vehicle having at least one central control unit (7), a display (5), at least one input means (3), a man-machine interface, MMI, (50) and multiple applications (56a, 56b, 56c, 56d, 56e) that each define a category, wherein the applications (56a, 56b, 56c, 56d, 56e) are each connected to a database (58a, 58b, 58c, 58e, 58d) containing category-specific data,
the central control unit (7) contains a central search component (50; 50b), one or more instances of which can be called by a user of the FIS (1) via the man-machine interface, MMI, (50) at any time, and
the central search component (50; 50b) is configured to define an application of the FIS (1) that is currently running in the foreground as a current context for a search, and the one instance or the multiple instances of the search component (50; 50b) is or are configured to perform a context-specific search query in the category-specific data in each case in at least one category associated with one of the applications by searching primarily in the category-specific data of the application from which the search was called,
**characterized in that**
the central search component (50; 50b) is configured to perform the search as a global search in all supported categories and to deliver the search results for the current context first;
wherein the central search component (50; 50b) is additionally configured so as, after the user has selected a search result (43, 45) that comes from the navigation category and not from the category associated with the current context, to offer possible category-specific next interaction steps (47) for the selected search result for the navigation category.

2. Driver information system (1) according to Claim 1, wherein the central search component (50; 50b) is configured to display predeterminable search words to the user for selection after the search component is called.

3. Driver information system (1) according to Claim 2, wherein the predeterminable search words are the search words entered for a last search.

4. Driver information system (1) according to one of Claims 1 to 3, wherein the central search component (50; 50b) is configured to display the search results in a manner sorted according to subcategories.

5. Driver information system (1) according to Claim 4, wherein a heading (39) and at least two specific results (43, 45) are always displayed to the user for direct selection on the display (5).

6. Driver information system (1) according to one of Claims 1 to 5, wherein the data to be searched in the respective categories are data of a file, data of a calendar entry, data of a note, data of a webpage or data in a database, and/or
wherein the data to be searched in the respective categories are filed locally inside the vehicle or outside the vehicle, and/or
wherein the data to be searched in the respective categories are either all filed in a central file or database, filed in separate files or databases per category or filed in a combination of these, and/or wherein the data to be searched in specific categories are filed collectively in a common database and the data in the other categories are created in individual files or databases.

7. Driver information system (1) according to one of Claims 1 to 6, wherein the central search component (50; 50b) is set up to search and find any data available in the FIS (1).

8. Driver information system (1) according to one of Claims 1 to 7, wherein every category of the FIS (1) has an assigned search component or instance of the central search component, so that the respective search component or instance takes on the searching of the database (58a, 58b, 58c, 58d, 58e) in the applicable category as soon as it receives a search input from the central search component (50; 50b).

9. Driver information system (1) according to one of Claims 1 to 8, wherein the central search component (50; 50b) is configured to search independent files (52) and/or databases and to forward search queries to respective search instances associated with the categories and to collect all search results; or wherein the central search component (50; 50b) is configured to index data and/or files (52) from specific categories and to store them together with index data in an independent database (60) with direct access (62), to forward search queries only to the search instances whose data have not been indexed, and to combine independent search results with those of the further search instances; or
wherein the central search component (50; 50b) is configured to index the data and/or files (52) in all categories in a global database (60) and to perform every search completely itself; or
wherein the central search component (50; 50b) has direct access to the respective data and/or files and/or databases in the individual categories and is configured to perform the search itself.

10. Driver information system according to one of Claims 1 to 9, wherein the central search component (50b) is in a form such that it is separate from the man-machine interface (50a) or integrated therein.

11. Driver information system (1) according to one of the preceding claims, wherein the arrangement or the display order of the search results can be set by the user.

12. Driver information system (1) according to one of the preceding claims, wherein the central search component (50; 50b) is configured to offer the user of the FIS (1), together with the search results, a search query with the most recently entered search term in another category of the FIS (1).

13. Motor vehicle having a driver information system according to one of Claims 1 to 12.

14. Motor vehicle according to Claim 13, wherein the motor vehicle is an automobile or a motorcycle.

## Revendications

1. Système d'information du conducteur, SIC, (1) pour un véhicule à moteur muni d'au moins une unité de commande centrale (7), d'un affichage (5), d'au moins un moyen d'entrée (3), d'une interface homme-machine, IHM, (50) et de plusieurs applications définissant à chaque fois une catégorie (56a, 56b, 56c, 56d, 56e),
les applications (56a, 56b, 56c, 56d, 56e) étant à chaque fois reliées avec une banque de données (58a, 58b, 58c, 58e, 58d) munie de données spécifiques à la catégorie,
l'unité de commande centrale (7) contenant un composant de recherche central (50 ; 50b), dont une ou plusieurs instances peuvent être appelées à tout moment par un utilisateur du SIC (1) par l'intermédiaire de l'interface homme-machine, IHM, (50), et
le composant de recherche central (50 ; 50b) étant configuré pour définir une application fonctionnant actuellement à l'avant-plan du SIC (1) en tant que contexte actuel pour une recherche, et ladite une instance ou lesdites plusieurs instances du composant de recherche (50 ; 50b) étant configurées pour réaliser à chaque fois, dans au moins une catégorie associée à une des applications, une requête de recherche spécifique au contexte dans les données spécifiques à la catégorie, par le fait que la recherche est effectuée premièrement dans les données spécifiques à la catégorie de l'application à partir de laquelle la recherche a été appelée,
**caractérisé en ce que**
le composant de recherche central (50 ; 50b) est configuré pour réaliser la recherche en tant que recherche globale dans toutes les catégories supportées et pour fournir tout d'abord les résultats de recherche pour le contexte actuel ;
le composant de recherche central (50 ; 50b) étant en outre configuré, après une sélection d'un résultat de recherche (43, 45) par l'utilisateur, qui provient de la catégorie navigation et non de la catégorie associée au contexte actuel, pour proposer des étapes d'interaction suivantes possibles spécifiques à la catégorie (47) pour le résultat de recherche sélectionné pour la catégorie navigation.

2. Système d'information du conducteur (1) selon la revendication 1, dans lequel le composant de recherche central (50 ; 50b) est configuré pour afficher à l'utilisateur des mots de recherche prédéterminables pour la sélection après un appel du composant de recherche.

3. Système d'information du conducteur (1) selon la revendication 2, dans lequel les mots de recherche prédéterminables sont les mots de recherche entrés lors d'une dernière recherche.

4. Système d'information du conducteur (1) selon l'une quelconque des revendications 1 à 3, dans lequel le composant de recherche central (50 ; 50b) est configuré pour afficher les résultats de recherche triés par sous-catégories.

5. Système d'information du conducteur (1) selon la revendication 4, dans lequel il est toujours affiché à l'utilisateur un titre (39) et au moins deux résultats spécifiques (43, 45) pour la sélection directe sur l'affichage (5).

6. Système d'information du conducteur (1) selon l'une quelconque des revendications 1 à 5, dans lequel les données à rechercher des catégories respectives sont des données d'un fichier, des données d'une entrée de calendrier, des données d'une note, des données d'un site Web ou des données dans une banque de données, et/ou
les données à rechercher des catégories respectives sont enregistrées localement à l'intérieur du véhicule ou à l'extérieur du véhicule, et/ou
les données à rechercher des catégories respectives sont soit toutes enregistrées dans un fichier ou une banque de données central, soit dans des fichiers ou banques de données séparés par catégorie, soit une combinaison de ceux-ci, et/ou
les données à rechercher de certaines catégories sont enregistrées regroupées dans une banque de données commune et les données des autres catégories sont placées dans des fichiers ou des banques de données individuels.

7. Système d'information du conducteur (1) selon l'une quelconque des revendications 1 à 6, dans lequel le composant de recherche central (50 ; 50b) est conçu pour rechercher et trouver toutes les données disponibles dans le SIC (1).

8. Système d'information du conducteur (1) selon l'une quelconque des revendications 1 à 7, dans lequel chaque catégorie du SIC (1) comprend un composant de recherche attribué ou une instance du composant de recherche central, de telle sorte que le composant de recherche ou l'instance respectif prend en charge la recherche de la banque de données (58a, 58b, 58c, 58d, 58e) de la catégorie correspondante, dès que celui-ci reçoit une entrée de recherche du composant de recherche central (50 ; 50b).

9. Système d'information du conducteur (1) selon l'une quelconque des revendications 1 à 8, dans lequel le composant de recherche central (50 ; 50b) est configuré pour rechercher des fichiers (52) et/ou des banques de données propres et pour transférer des requêtes de recherche vers des instances de recherche respectives des catégories et pour collecter tous les résultats de recherche ; ou dans lequel le composant de recherche central (50 ; 50b) est configuré pour indexer des données et/ou des fichiers (52) de certaines catégories et pour stocker ceux-ci conjointement avec des données d'index dans une banque de données propre (60) avec accès direct (62), pour transférer des requêtes de recherche uniquement vers les instances de recherche dont les données n'ont pas été indexées, et pour rassembler des résultats de recherche propres avec ceux des autres instances de recherche ; ou
dans lequel le composant de recherche central (50 ; 50b) est configuré pour indexer les données et/ou fichiers (52) de toutes les catégories dans une banque de données globale (60) et pour réaliser chaque recherche entièrement lui-même ; ou
dans lequel le composant de recherche central (50 ; 50b) a un accès direct aux données et/ou fichiers et/ou banques de données respectifs des catégories individuelles et est configuré pour réaliser la recherche lui-même.

10. Système d'information du conducteur selon l'une quelconque des revendications 1 à 9, dans lequel le composant de recherche central (50b) est configuré séparément de l'interface homme-machine (50a) ou intégré dans celle-ci.

11. Système d'information du conducteur (1) selon l'une quelconque des revendications précédentes, dans lequel l'agencement ou l'ordre d'affichage des résultats de recherche est ajustable par l'utilisateur.

12. Système d'information du conducteur (1) selon l'une quelconque des revendications précédentes, dans lequel le composant de recherche central (50 ; 50b) est configuré pour proposer à l'utilisateur du SIC (1) conjointement avec les résultats de recherche une requête de recherche avec le terme de recherche entré en dernier dans une autre catégorie du SIC (1).

13. Véhicule à moteur muni d'un système d'information du conducteur selon l'une quelconque des revendications 1 à 12.

14. Véhicule selon la revendication 13, dans lequel le véhicule à moteur est une automobile ou une motocyclette.
